# EUROPÄISCHE PATENTSCHRIFT

(11) **EP 0 567 803 B1**
(45) Veröffentlichungstag und Bekanntmachung des Hinweises auf die Patenterteilung: **28.12.1994**
(21) Anmeldenummer: 93105554.5
(22) Anmeldetag: 03.04.1993
(51) Int. Cl.: B23Q 3/08, B25B 11/00, B23Q 1/16

(54) **Spannvorrichtung für Werkstücke**
Clamping device for work pieces
Dispositif de serrage pour pièces

(30) Priorität: 24.04.1992 DE 4213492
(43) Veröffentlichungstag der Anmeldung: 03.11.1993
(73) Patentinhaber: Daimler-Benz Aerospace Airbus Gesellschaft mit beschränkter Haftung, 21129 Hamburg (DE)
(72) Erfinder: Eickhorst, Helmut, W-2930 Varel 1 (DE); Wilken, Enno, W-2930 Varel 1 (DE)
(74) Vertreter: Hansmann, Dierk, Dipl.-Ing.

(56) Entgegenhaltungen:
- EP-A- 0 461 064
- DE-B- 1 140 047
- DE-B- 1 169 760
- DE-C- 3 126 720
- GB-A- 2 205 258
- US-A- 3 273 879

## Beschreibung

Die Erfindung bezieht sich auf eine Spannvorrichtung für Werkstücke, insbesondere von großflächigen Werkstücken geringer Wandstärke, bei der das Werkstück zum Bearbeiten durch Unterdruckspanneinheiten gehalten wird, die in einer kugelförmig gestalteten Innenform eines Tragkörpers schwenkbar angeordnete Spannelemente umfaßt, die eine der Innenform angepaßte Außenform aufweisen.

Bei der Bearbeitung von sphärisch vorverformten dünnwandigen Blechteilen, wie beispielsweise Beplankungsflächen von Flugzeugen, ergibt sich die Forderung, daß die Auflagepunkte an solchen Werkstücken während der Bearbeitung exakt mit der Form des Werkstücks übereinstimmen müssen, um lokale Verformungen des Werkstücks zu vermeiden. Zum exakten Spannen dieser Werkstücke ist es aus der DE-31 26 720 C2 bekannt, Spannelemente zu verwenden, die über einen Unterdruck des Werkstücks am Spannelement halten. Ein derartiges Spannelement umfaßt im wesentlichen ein in einem in der Höhe verstellbaren Tragkörper gelagertes Spannelement, das in einer Halbkugelschale des Tragkörpers verschwenkbar geführt ist und unter verschiedenen Winkeln zu einer horizontalen Ebene eingestellt werden kann. Im Fuß des Tragkörpers sind die Anschlüsse für die Zuführung von Druckluft und für die Verbindung mit einem Unterdruckerzeuger angeordnet.

Der Erfindung liegt die Aufgabe zugrunde, eine verbesserte Spannvorrichtung des sphärisch gewölbten Werkstücks zu schaffen, mit der jedes Werkstück unabhängig von seiner sphärischen Form unterstützt und festgelegt werden kann.

Diese Aufgabe wird bei einer Spannvorrichtung der eingangs genannten Art erfindungsgemäß mit den kennzeichnenden Merkmalen des Anspruchs 1 gelöst
Die mit der Erfindung hauptsächlich erzielten Vorteile bestehen darin, daß mit dem Spannelement über die zwischengelagerte Schwenkscheibe eine Schwenkbeweglichkeit erzielt wird, welches eine Unterstützung des zu spannenden Werkstücks unter einem großen Winkel zu einer Horizontalen ermöglicht. So können auch sphärische Werkstücke mit relativ engen Wölbungen optimal gehalten und gespannt werden.

Die Schwenkscheibe ist hierzu auf den Tragkörper auf einer ersten Führungsfläche verschwenkbar, wobei das Spannelement wiederum auf einer zweiten Führungsfläche der Schwenkscheibe verstellbar ist. Hierdurch ergibt sich ein maximaler Verschwenkwinkel des Spannelements. Die Führungsflächen sind jeweils als Kugelabschnitte ausgeführt, so daß die Bewegungsmöglichkeiten der Schwenkscheibe und des Spannelements in allen Richtungen stufenlos möglich werden.

Der Tragkörper und die Schwenkscheiben weisen jeweils eine innenliegend der kreisringförmig angeordneten Führungsflächen jeweils eine Vertiefung auf, in der ein zentrischer Ansatz an der Schwenkscheibe und des Spannelements freiliegend hineinragen. Diese Ansätze am Spannelement sowie an der Schwenkscheibe werden vom umlaufenden Begrenzungsabsatz zu den Führungsflächen und der Vertiefung gebildet, wobei der Ansatz hierdurch in seiner Bewegungsmöglichkeit begrenzt ist und somit die Schwenkscheibe auf dem Tragkörper und das Spannelement auf der Schwenkscheibe während der Schwenkbewegung untrennbar miteinander verbunden sind.

Ein Ausführungsbeispiel der Erfindung ist in der Zeichnung schematisch dargestellt. Es zeigen:

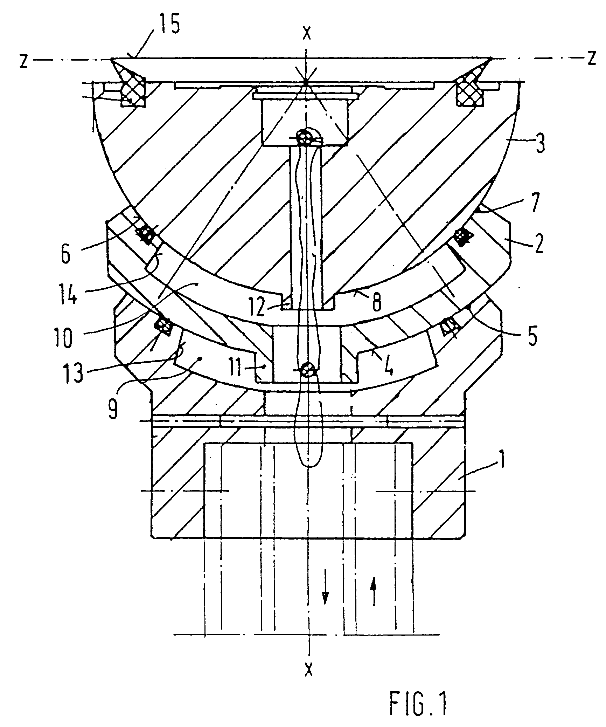

- Fig.1: eine Spannvorrichtung, bestehend aus einem Tragkörper, einer Schwenkscheibe und einem Spannelement in einer horizontalen Spannstellung **und**

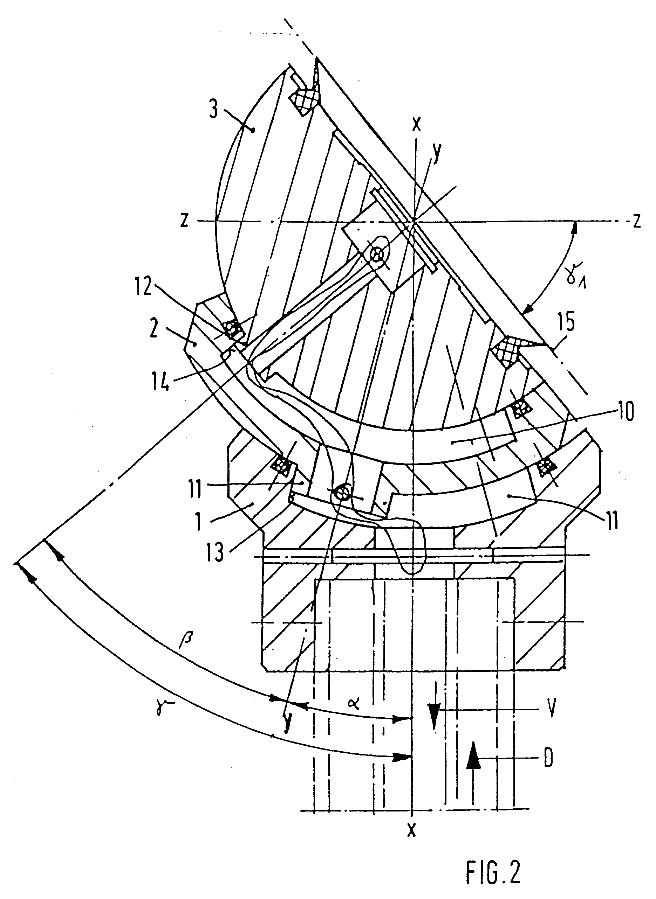

- Fig. 2: die Spannvorrichtung im Schnitt in einer schräg gestellten Spannstellung.

Die Spannvorrichtung besteht aus einem Grundkörper 1, der auf einem verschieblich gehaltenen Tragzapfen in Hochrichtung verstellbar ist. Auf dem Grundkörper 1 ist über eine zwischengelagerte Schwenkscheibe 2 ein Spannelement 3 verstellbar gelagert.

Die Schwenkscheibe 2 weist eine einen Kugelabschnitt bildende konvexe Außenfläche als Gleitfläche 4 auf, die einer ersten Führungsfläche 5 des Tragkörpers 1 gegenübersteht. Parallel liegend zu dieser konvexen Außenfläche 4 wird eine konkave Innenfläche 6 an der Schwenkscheibe 2 gebildet, die wiederum eine Führungsfläche 7 für die Gleitfläche 8 des Spannelements 3 bildet. Die beiden Führungsflächen 5 und 7 am Tragkörper 1 und an der Schwenkscheibe 2 sind jeweils als innere Kugelabschnitte und die diesen gegenüberstehenden Gleitflächen 4 und 8 sind jeweils als äußere Kugelabschnitte ausgeführt.

Die Führungsflächen 5 und 7 sind jeweils als Kreisringe ausgebildet und am Rand des Tragkörpers 1 und der Schwenkscheibe 2 angeordnet. Innerhalb des Ringes bzw. der Führungsflächen 5 und 7 ist jeweils eine zentrische Vertiefung 9 und 10 vorgesehen. In die Vertiefung 9 ragt ein zentrischer Ansatz 11 der Schwenkscheibe 2 und in die weitere Vertiefung 10 ragt ein Ansatz 12 des Spannelements 3 hinein.

Die Vertiefung 9 und 10 endet mit einem Absatz 13 und 14 zur Führungsfläche 5 und 7, welche somit einen Anschlag für den Ansatz 11 und 12 und somit eine Begrenzung der Schwenkbewegung der Schwenkscheibe 2 zum Tragkörper 1 und des Spannelements 3 zur Schwenkscheibe 2 bildet.

Die Schwenkscheibe 2 ist in ihrer Verstellbarkeit gegenüber dem Tragkörper 1 so ausgelegt, daß von der senkrechten Mittenachse x-x in allen Richtungen auf der Führungsfläche 5 des Grundkörpers 1 ein maximaler Winkel α von 15° einstellbar ist. Auf der Schwenkscheibe 2 ist das Spannelement 3 zur Mittenachse y-y dieses Elements um einen Winkel β von 35° verschwenkbar, so daß sich insgesamt ein Verstellwinkel γ von 50° ergibt, und sich eine Schrägstellung der Spannfläche 15 am Spannelement 3 zur horizontalen Ebene z-z von γ₁ = 50° ergibt.

Zum Spannen des Werkstücks auf dem Spannelement 3 wird ein Vakuum V erzeugt, wozu in den einzelnen Elementen 1, 2 und 3 Bohrungen bzw. Kanäle vorgesehen sind. Eine Druckluft D wird über Kanäle bzw. Bohrungen zum Spannelement 3 geleitet, um die richtige Spannposition des Werkstücks, sowie ein Lösen des gespannten Werkstücks vom Spannelement zu ermöglichen .

## Patentansprüche

1. Spannvorrichtung für Werkstücke, insbesondere von großflächigen Werkstücken geringer Wandstärke, bei der das Werkstück zum Bearbeiten durch Unterdruckspanneinheiten gehalten wird, die in einer kugelförmig gestalteten Innenform eines Tragkörpers schwenkbar angeordnete Spannelemente umfaßt, die eine der Innenform angepaßte Außenform aufweisen, dadurch gekennzeichnet, daß das Spannelement (3) über eine zwischengelagerte kalottenförmige Schwenkscheibe (2) auf dem Tragkörper (1) gehalten ist und die Schwenkscheibe (2) gegenüber dem Tragkörper (1) auf einer ersten kugelförmigen Führungsfläche (5) und das Spannelement (3) gegenüber der Schwenkscheibe (2) und/oder dem Tragkörper (1) auf einer zweiten Führungsfläche (7) verstellbar angeordnet ist.

2. Spannvorrichtung nach Anspruch 1, dadurch gekennzeichnet, daß die Schwenkscheibe (2) eine einen äußeren Kugelabschnitt bildende konvexe Außenfläche (4) aufweist, die der ersten Führungsfläche (5) des Tragkörpers (1) gegenübersteht und parallel zu der Außenfläche (4) eine konkave Innenfläche (6) gebildet ist, die der zweiten Führungsfläche (7) für das Spannelement (3) bildet.

3. Spannvorrichtung nach Anspruch 1 oder 2, dadurch gekennzeichnet, daß die Führungsflächen (5 und 7) des Tragkörpers (1) und der Schwenkscheibe (2) als Kreisringe ausgeführt sind und innerhalb jedes Ringes eine Vertiefung (9 und 10) vorgesehen ist, in die jeweils ein zentrischer Ansatz (11 und 12) der verstellbaren Schwenkscheibe (2) und des Spannelements (3) hineinragen.

4. Spannvorrichtung nach Anspruch 3, dadurch gekennzeichnet, daß die Vertiefungen (9 und 10) zur Führungsfläche (5 und 7) einen umlaufenden Begrenzungsabsatz (13 und 14) bildet, der einen Anschlag für den zentrischen Ansatz (11 und 12) darstellt.

5. Spannvorrichtung nach Anspruch 1, dadurch gekennzeichnet, daß die Schwenkscheibe (2) von der senkrechten Mittenachse (x-x) des Tragkörpers (1) aus jeweils um einen Winkel α von 15° nach jeder Seite auf der Führungsfläche (5) verstellbar ist.

6. Spannvorrichtung nach einem der Ansprüche 1 bis 5, dadurch gekennzeichnet, daß das Spannelement (3) von der senkrechten Mittenachse (y-y) der Schwenkscheibe (2) aus jeweils um einen Winkel β von 35° nach jeder Seite verstellbar ist.

7. Spannvorrichtung nach Anspruch 1, dadurch gekennzeichnet, daß die Aufnahmefläche (15) des Spannelements (3) zu einer horizontalen Ebene (z-z) unter einem Winkel γ ₁ = 50° auf den Tragkörper (1) und der Schwenkscheibe (3) verstellbar ist.

## Claims

1. Clamping device for components, especially for large surface components having a low wall strength, in which, in order to be worked-on, the component is held by suction-type clamping units, which comprises swivelling clamping elements arranged in a spherically constructed inner part of a support body, which elements have an outer shape that is matched to that of the inner part, characterised in that, the clamping element (3) is held on the support body (1) via an intermediately mounted cup shaped tilting member (2) and the tilting member (2) is adjustably arranged relative to the support body (1) on a first spherically shaped guide surface (5) and the clamping element (3) is adjustably arranged relative to the tilting member (2) and/or the support body (1) on a second guide surface (7).

2. Clamping device in accordance with Claim 1, characterised in that, the tilting member (2) comprises a convex outer surface forming an outer ball section which faces the first guide surface (5) of the support body (1) and a concave inner surface (6), which forms the second guide surface (7) for the clamping element (3), is formed parallel to the outer surface (4).

3. Clamping device in accordance with Claim 1 or 2, characterised in that, the guide surfaces (5 and 7) of the support body (1) and of the tilting member (2) are constructed as circular rings and within each ring there is provided a recess (9 and 10) into which a respective central lug (11 and 12) of the adjustable tilting member (2) and of the clamping element (3) project.

4. Clamping device in accordance with Claim 3, characterised in that, the recesses (9 and 10) form a surrounding limiting shoulder (13 and 14) for the guide surfaces (5 and 7) which represents a stop for the central lug (11 and 12).

5. Clamping device in accordance with Claim 1, characterised in that, the tilting member (2) is adjustable on the guide surface (5) from the vertical central axis (x-x) of the support body (1) through a respective angle α of 15° to each side.

6. Clamping device in accordance with any of the Claims 1 to 5, characterised in that, the clamping element (3) is adjustable from the vertical central axis (y-y) of the tilting member (2) through a respective angle β of 35° to each side.

7. Clamping device in accordance with Claim 1, characterised in that, the mounting surface (15) of the clamping element (3) is adjustable on the support body (1) and the tilting member (3) through an angle γ1 = 50° relative to a horizontal plane (z-z).

## Revendications

1. Dispositif de serrage de pièces, notamment de pièces de grande surface et de faible épaisseur de paroi, selon lequel on maintient la pièce à usiner par des éléments de serrage à dépression, dispositif comprenant des éléments de serrage montés pivotants dans une forme intérieure sphérique d'un organe de support, ces éléments de serrage ayant une forme extérieure adaptée à la forme intérieure,
dispositif caractérisé en ce que l'élément de serrage (3) est maintenu sur le corps de support (1) par un disque pivotant en forme de calotte (2), interposé, ce disque pivotant (2) étant monté réglable par rapport au corps de support (1) sur une première surface de guidage (5), sphérique, et l'élément de serrage (3) étant monté réglable par rapport au disque pivotant (2) et/ou au corps de support (1) sur une seconde surface de guidage (7).

2. Dispositif de serrage selon la revendication 1, caractérisé en ce que l'axe pivotant (2) présente une surface extérieure (4), convexe formant une calotte sphérique extérieure, en regard de la première surface de guidage (5) de l'organe de support (1) et en parallèle à la surface extérieure (4), une surface intérieure (6), concave en regard de la seconde surface de guidage (7) pour l'élément de serrage (3).

3. Dispositif de serrage selon la revendication 1 ou 2, caractérisé en ce que les surfaces de guidage (5 et 7) de l'organe de support (1) et du disque pivotant (2) sont en forme d'anneaux de cercle et à l'intérieur de chaque anneau, il y a une cavité (9, 10) dans laquelle pénètre chaque fois un prolongement centré (11, 12) du disque pivotant (2), réglable et de l'élément de serrage (3).

4. Dispositif de serrage selon la revendication 3, caractérisé en ce que les cavités (9 et 10) forment par rapport aux surfaces de guidage ( 5 et 7), un décrochement périphérique de limitation (13, 14) constituant une butée pour le prolongement central (11, 12).

5. Dispositif de serrage selon la revendication 1, caractérisé en ce que le disque pivotant (2) est réglable par rapport à l'axe central vertical (x-x) du corps de support (1), jusqu'à un angle α de 15° de chaque côté sur la surface de guidage (5).

6. Dispositif de serrage selon l'une des revendications 1 à 5, caractérisé en ce que l'élément de serrage (3) peut être déplacé par rapport à l'axe central vertical (y-y) du disque pivotant (2), chaque fois jusqu'à un angle β de 35° de chaque côté.

7. Dispositif de serrage selon la revendication 1, caractérisé en ce que la surface de réception (15) de l'élément de serrage (3) est réglable par rapport à un plan horizontal (z-z) suivant un angle γ₁ = 50° par rapport au corps de support (1) et au disque pivotant (3).
